# NEUE EUROPÄISCHE PATENTSCHRIFT

(11) **EP 0 241 711 B2**
(45) Veröffentlichungstag und Bekanntmachung des Hinweises auf die Entscheidung über den Einspruch: **18.11.1993**
(45) Hinweis auf die Patenterteilung: 07.03.1990
(21) Anmeldenummer: 87103555.6
(22) Anmeldetag: 11.03.1987
(51) Int. Cl.: B60P 3/08

(54) **Doppelstöckiger Kraftfahrzeugtransporter**
Double-deck motor vehicle transporter
Véhicule à double pont pour le transport de véhicules à moteur

(30) Priorität: 14.04.1986 DE 8610072 U
(43) Veröffentlichungstag der Anmeldung: 21.10.1987
(73) Patentinhaber: Kässbohrer-Austria Fahrzeugwerke GmbH, A-5020 Salzburg (AT)
(72) Erfinder: Däuber, Wilfried, D-8242 Bischofswiesen (DE); Kraihamer, Matthias, A-5301 Eugendorf (AT); Gebetsroither, Harald, A-5020 Salzburg (AT); Wörndl, Matthias, A-5423 St. Koloman (AT)
(74) Vertreter: Grünecker, Kinkeldey, Stockmair & Schwanhäusser Anwaltssozietät

(56) Entgegenhaltungen:
- DE-B- 2 453 420
- GB-A- 2 139 968
- IT-B- 810 608
- IT-U- 162 390
- IT-U- 833 467
- US-A- 2 694 597

## Beschreibung

Die vorlfiegende Erfindung betrifft einen doppelstöckigen Kraftfahrzeugtransporter mit Fahrerhausüberbau und einer oberen, zumindest in Beladestellung an diesen anschließenden, höhenverstellbaren Ladebühne sowie einer unteren Ladebrücke.

Solche Kraftfahrzeugtransporter sind aus der Praxis mehrfach bekannt Zum druckschriftlich belegten Stand der Technik wird auf den Prospekt «Universal-Auto-Transporter MP-B/APT-B 12/84 KA» der Anmelderin verwiesen. Dieser Prospekt zeigt einen Kraftfahrzeugtransporter, welcher bei dem Zugfahrzeug eine einteilige obere Ladebühne zeigt Auf der oberen Ladebühne und dem Fahrerhausüberbau können gerade so viele Fahrzeuge abgestellt werden, wie diese ihrer Länge nach hintereinander angeordnet werden können.

Insbesondere bei Mittelklassewagen tritt dann das Problem auf, daß die Kraftfahrzeuge einerseits zu lang sind, um drei Wagen auf der oberen Ladebühne einschließlich des Fahrerhausüberbaus zu laden, und daß andererseits die Fahrzeuglängen nicht groß genug sind, damit die obere Ladebühne einschließlich des Fahrerhausüberbaus durch zwei Ffahrzeuge bereits ausgelastet ist.

Der Erfindung liegt daher die Aufgabe zugrunde, unter Beibehaltung einer einfachen Handhabung des Kraftfahrzeugtransporters dessen Einsetzbarkeit zu erweitern.

Diese Aufgabe wird erfindungsgemäß durch die Merkmale des Kennzeichens des Anspruchs 1 gelöst.

Auf diese Weise kann ein auf die Zwischenbühne gefahrenes Fahrzeug geschwenkt werden, so daß es beispielsweise mit seinem Heck über der Front eines anderen Fahrzeuges angeordnet ist, während es mit seiner Front unter dem Heck eines weiteren Fahrzeuges angeordnet ist. Dadurch lassen sich die Fahrzeuge praktisch ineinander verschachteln. Das Besondere an dieser Lösung ist, daß beispielsweise das erste Fahrzeug auf dem Fahrerhausüberbau in der Endlage abgestellt wird. Dazu ist die Verbindungsbrücke, die einen Bestandteil der schwenkbaren Zwischenbühne bildet, ausgezogen. Vor der Beladung des zweiten PKW's wird die Verbindungsbrücke der schwenkbaren Zwischenbühne eingeschoben und die Ladebühne im vorderen Tragarmpaar maximal angehoben. Nach der Beladung des zweiten PKW's wird die Verbindungsbrücke im vorderen Heckbereich der Ladebrücke eingeschoben. Die Zwischenbühne kann nun verschwenkt werden. Der dritte PKW wird auf die angehobenen Schachtelschienen, die mit den einhängbaren Verlängerungen versehen sind, aufgefahren. Auf diese Weise ermöglicht es die erfindungsgemäße Lösung, daß auch 3 größere Fahrzeuge, z. B. Mittelklassewagen, die von ihrer Länge her normalerweise nicht auf das Oberdeck eines Kraftfahrzeugtransporters passen würden, nacheinander auf dem Oberdeck abgestellt werden können, ohne daß ein nachträgliches Rangieren der Fahrzeuge vonnöten wäre.

Von besonderem Vorteil ist daß eine Höhenverstelleinrichtung für die Ladebühne derart ausgebildet ist, daß die Ladebühne über Transporthöhe anhebbar ist.

Gemäß einer bevorzugten Ausgestaltung der Erfindung ist die Zwischenbühne heckseitig absenkbar ausgebildet

Eine einfache Handhabung der Zwisckenbühne ergibt sich dadurch, daß diese mittels der quer zur Transporterlängsachse angeordneten Schwenkachse an der Ladebühne gelagert ist.

Für das heckseitige Absenken der Zwischenbühne ist es vorteilhaft, wenn die Schwenkachse im Bereich des frontseitigen Endes der Ladebühne angeordnet ist

Vorteilhaft ist auch, daß die Zwischenbühne zwischen dem Fahrerhausüberbau und einem heckseitigen Tragarmpaar für die Ladebühne angeordnet ist. Auf diese Weise wird die Zwischenbühne dem zweiten aufgefahrenen Fahrzeug zugeordnet, welches sich dann bei einem herkömmlichen Transporter zwischen einem ersten und einem dritten Fahrzeug befindet. Auf diese Weise kann eine einfache Verschachtelung der Fahrzeuge erreicht werden, indem lediglich das mittlere Fahrzeug, weiches nun auf der schwenkbaren Zwischenbühne steht, verschwenkt wird. Obwohl die Zwischenbühne auch hinter dem heckseitigen Tragarmpaar angeordnet sein könnte, wird durch die bevorzugte Anordnung eine besonders wirksame Erhöhung der Ladekapazität des Kraftfahrzeugtransporters erzielt.

Die Höhenvestelleinrichtung kann dann nicht nur dafür genutzt werden, bei einem Beladen des Fahrerhausüberbaues die obere Ladebühne unter Transporthöhe angehoben zu halten, sondern die obere Ladebühne während des Beladens der unteren Ladebrücke so weit anzuheben, daß die unteren Kraftfahrzeuge in einem Zug auf die untere Ladebrücke aufgefahren werden können, ohne durch die obere verschwenkte Zwischenbühne behindert zu werden. Eine derartige Höhenverstelleinrichtung ermöglicht also, daß in einem Zug die obere Ladebühne beladen werden kann und anschließend, ebenfalls in einem Zug, die übrigen Fahrzeuge auf die untere Ladebrücke aufgefahren werden können.

Der Platz auf dem Oberdeck des Kraftfahrzeugtransporters läßt sich noch besser dadurch ausnutzen, daß die Ladebühne heckseitig von der Zwischenbühne nach oben anhebbare Schachtelschienen aufweist. Nachdem das erste und das zweite Fahrzeug auf dem Oberdeck geladen sind, können diese Schachtelschienen angehoben werden, so daß das dritte Fahrzeug in Fahrtrichtung des Transporters angestellt wird. Auf diese Weise kann außerdem die erforderliche heckseitige Absenkung der Zwischenbühne vermindert werden.

Da die Schachtelschienen mit einhängbaren Verlängerungen versehen sein können, sind sie an verschiedene Fahrzeuge anzupassen, so daß beispielsweise das dritte Fahrzeug auch länger ausgebildet sein kann.

Im folgenden wird ein Ausführungsbeispiel der Erfindung anhand einer Zeichnung näher erläutert.

Es zeigen:
Figur 1 in einer Seitenansicht einen erfindungsgemäßen Kraftfahrzeugtransporter in Ladegrundstellung,
Figur 2 in einer gleichen Ansicht wie in Fig. 1 den Kraftfahrzeugtransporter in fortgeschrittenem Ladezustand,

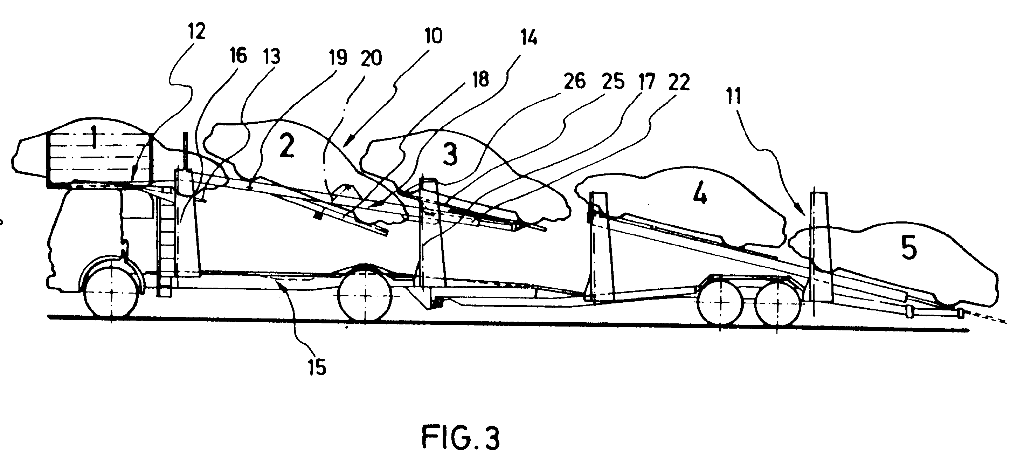

Figur 3 den Kraftfahrzeugtransporter in noch weiter fortgeschrittenem Ladezustand und,

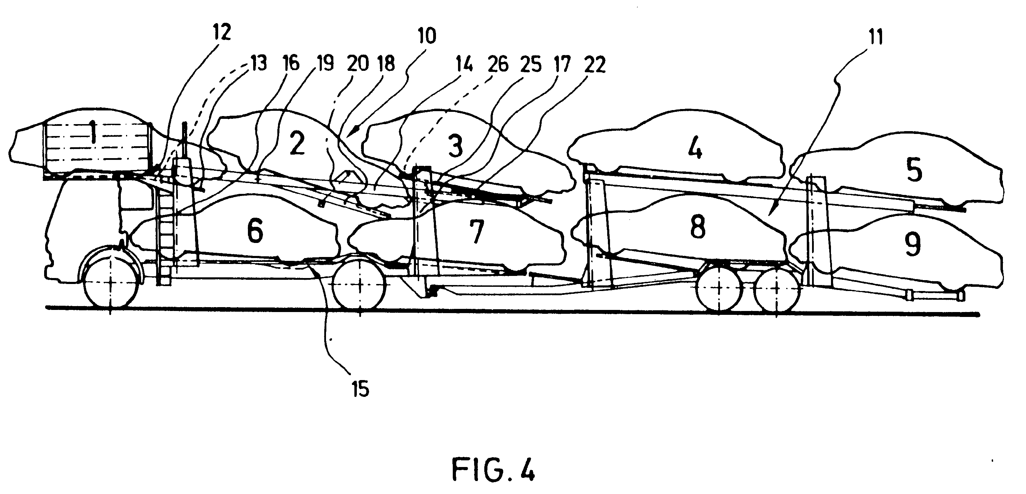

Figur 4 den Kraftfahrzeugtransporter in vollständig beladenem Zustand.

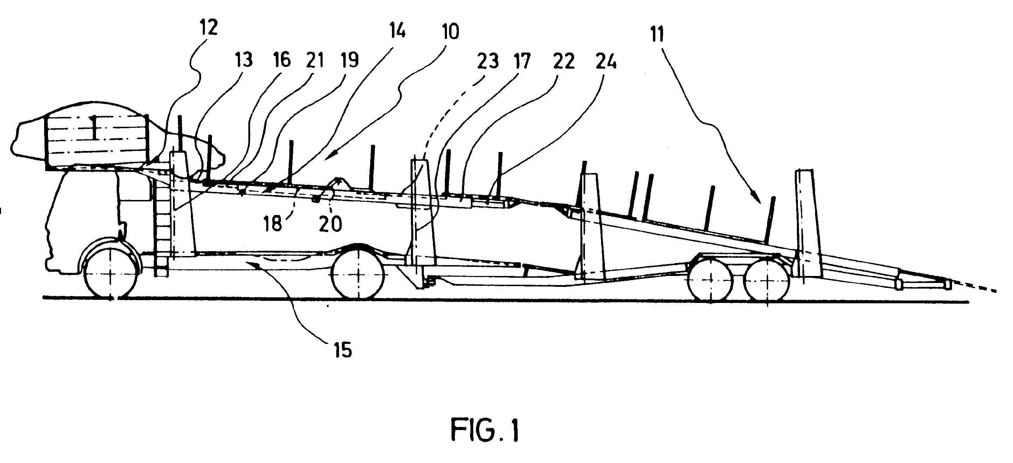

In der Figur 1 ist ein doppelstöckiger Kraftfahrzeugtransporter 10 mit einem ebenfalls doppelstöckigen Transportanhänger 11 dargestellt.

Der Transportanhänger 11 entspricht dem Stand der Technik, so daß eine eingehende Beschreibung des Transportanhängers 11 entbehrlich ist.

Der Kraftfahrzeugtransporter 10 besitzt einen Fahrerhausüberbau 12 mit einer festen Plattform 13. Entgegen der Fahrtrichtung schließt sich an die Plattform 13 des Fahrerhausüberbaus 12 eine höhenverstellbare obere Ladebühne 14 an, die bis zum Heck des Kraftfahrzeugtransporters 10 reicht. Unterhalb der oberen Ladebühne 14 befindet sich, wie bei herkömmlichen Kraftfahrzeugtransportem auch, eine untere Ladebrücke 15.

Die obere Ladebühne 14 wird durch seitliche Tragarmpaare 16 und 17 gehalten. Das vordere Tragarmpaar 16 ist unmittelbar hinter dem Fahrerhausüberbau 12 angeordnet, während das hintere Tragarmpaar 17 hinter der Hinterachse des Kraftfahrzeug transporters angeordnet ist. Bei den hier verwendeten Tragarmpaaren handelt es sich um starre Säulen, in denen ein Spindelantrieb zur Höhenverstellung der oberen Ladebühne 14 vorgesehen ist. Eine solche Höhenverstellung ist grundsätzlich aus dem Stand der Technik bekannt.

Die obere Ladebühne 14 weist zwischen der Plattform 13 des Fahrerhausüberbaus 12 und dem heckseitigen Tragarmpaar 17 eine Zwischenbühne 18 auf. Die Zwischenbühne kann für das Beladen, wie Fig. 1 zeigt, in der Ebene der Ladebühne 14 angeordnet werden. Darüber hinaus ist die Zwischenbühne 18 um eine quer zur Transporterlängsachse angeordnete Schwenkachse 19 schwenkbar. Die Schwenkachse 19 ist im Bereich des frontseitigen Endes der Ladebühne 14, genauer auch im frontseitigen Ende der Zwischenbühne 18 angeordnet.

Die Zwischenbühne 18 ist zum einen in der Schwenkachse 19 an der Ladebühne 14 gelagert und zum anderen durch schematisch dargestellte Hydraulikzylinder 20 heckseitig gehalten. Die Zwischenbühne ist heckseitig absenkbar ausgebildet, wobei die Absenkbewegung durch Verstellen der Hydraulikzylinder 20 bewirkt werden kann.

An ihrem Vorderende besitzt die Zwischenbühne 18 eine ausziehbare Verbindungsbrücke 21, die in der in Fig. 1 dargestellten Ladegrundstellung eine Verbindung zwischen der Plattform 13 des Fahrerhausüberbaus 12 und der Zwischenbühne 18 herstellt. Die Verbindungsbrücke 21 ist in Fig. 1 in ihrer ausgezogenen Stellung dargestellt.

Der Heckbereich 22 der Ladebühne 14 besitzt an seinem frontseitigen Ende ebenfalls eine einziehbare Verbindungsbrücke 23. Die Verbindungsbrücke 23 stellt zumindest in der Ladegrundstellung eine Verbindung zwischen dem frontseitigen Heckbereich 22, der oberen Ladebühne 14 und dem heckseitigen, absenkbaren Teil der Zwischenbühne 18 her. Bei dem hier dargestellten Ausführungsbeispiel ist die Verbindungsbrücke 21 hydraulisch aus- und einschiebbar, während die Verbindungsbrücke 23 per Hand ein- und ausgeschoben werden kann.

Wie an sich bekannt ist, ist das heckseitige Ende 24 des Heckbereiches 22 der oberen Ladebühne 14 nach hinten ausziehbar, um so die Gesamtlänge der oberen Ladebühne 14 variieren zu können.

Die aus den Tragarmpaaren 16 und 17 bestehende Höhenverstelleinrichtung für die obere Ladebühne 14 ist, wie später noch näher erläutert wird, derart ausgebildet, daß die Ladebühne 14 über Transporthöhe anhebbar ist. In Fig. 1 ist die obere Ladebühne 14 in der Ladegrundstellung dargestellt, welche noch unterhalb der normalen Transporthöhe angeordnet ist.

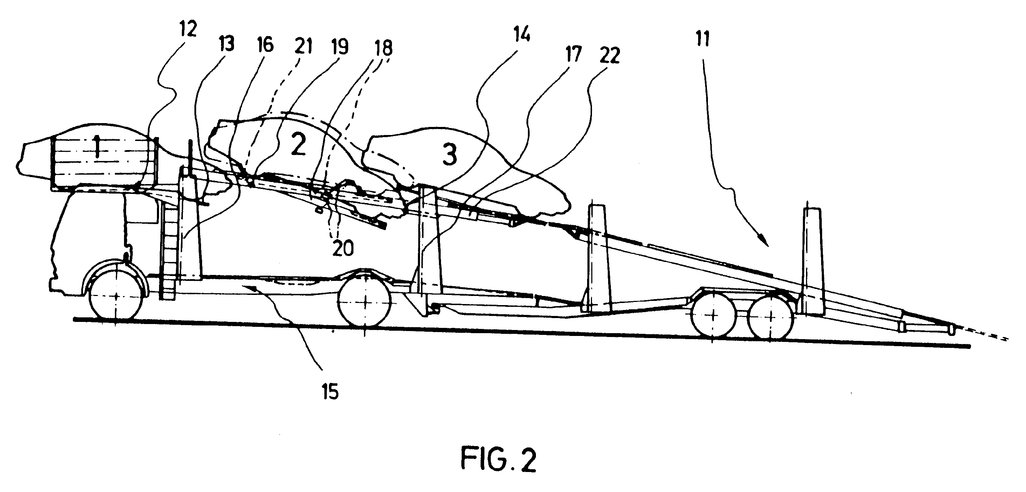

Wie in Fig. 2 ersichtlich ist, sind auf dem Heckbereich 22 der Ladebühne 14 nach oben anhebbare Schachtelschienen 25 angeordnet. In Fig. 1 sind diese Schachtelschienen 25 in die Ebene der Ladebühne 14 abgesenkt. Die Schachtelschienen 25 sind an ihrem frontseitigen Ende mit einhängbaren Verlängerungen 26 versehen.

Im folgenden wird die Handhabung des Kraftfahrzeugtransporters anhand der Beladung mit neun mittelklassewagen, welche bei dem hier zu betrachtenden Ausführungsbeispiel eine Länge von bis zu 4,45 m aufweisen aber erläutert.

In Fig. 1 ist die obere Ladebühne 14 so weit abgesenkt, daß ihr frontseitiges Ende mit der Plattform 13 des Fahrerhausüberbaus fluchtet. Von dort aus erstreckt sich die obere Ladebühne 14 heckwärts schräg nach unten geneigt, so daß unter Einsatz der oberen Ladebühne des Transportanhängers 11 eine Rampe gebildet wird. Wird der Kraftfahrzeugtransporter 10 ohne Transportanhänger 11 verwendet, wird die obere Ladebühne 14 entsprechend steiler geneigt. Prinzipiell besteht bei der Beladung jedoch kein Unterschied.

In dieser Ladegrundstellung ist die Zwischenbühne 18 in die Ebene der oberen Ladebühne 14 eingeschwenkt und die Verbindungsbrücke 21 ausgeschoben. Ein erster Mittelklassewagen 1 wird nun über die als Auffahrrampe geneigte obere Ladebühne 14 bis auf die Plattform 13 gefahren und dort abgestellt.

Im zweiten Beladungsschritt wird zunächst die Verbindungsbrücke 21 in die Zwischenbühne 18 eingeschoben. Sodann wird die obere Lädebühne 14 weiter nach oben angehoben, und zwar im Bereich des frontseitigen Endes der Ladebühne 14 über die Transporthöhe hinaus bis zu ihrer höchsten Stellung. Die anderen Tragarmpaare 17 des Kraftfahrzeugtransporters 10 bzw. die des Transportanhängers 11 werden entsprechend nachgefahren, so daß die oberen Ladebühnen 14 weiterhin eine Rampe bilden. Anschließend wird der zweite Pkw rückwärts bis auf die Zwischenbühne 18 gefahren, und zwar in die in der Figur 2 durch die strichpunktierte Linie angedeutete Stellung. Dabei liegt das Heck des zweiten Fahrzeuges oberhalb der Frontpartie des ersten Fahrzeuges, ohne daß das erste Fahrzeug dafür rangiert werden mußte.

Anschließend wird das heckseitige Ende der Zwischenbühne 18 um die Schwenkachse 19 nach unten abgesenkt, und zwar nachdem die Verbindungsbrücke 23 des Heckbereiches 22 eingeschoben wurde. Die Frontpartie des zweiten Fahrzeuges taucht nun in die Ebene der Ladebühne 14 ein.

Im dritten Beladungsschritt werden die Schachtelschienen 25 aus der Ebene der Ladebühne 14 angehoben. Nun wird das dritte Fahrzeug rückwärts auf den Heckbereich 22 der oberen Ladebühne 14 so aufgefahren, daß die Hinterräder auf den Schachtelschienen 25 abgestellt werden. In dieser Stellung ist die Heckpartie des dritten Fahrzeuges oberhalb der Frontpartie des zweiten Fahrzeuges angeordnet.

Nun wird die frontseitige Verlängerung des Oberdecks des Transportanhängers 11 eingeschoben, da ja nun keine Verbindung mehr zwischen den beiden Oberdecks bestehen muß. Die obere Plattform 14 wird im Bereich der hinteren Tragarmpaare 17 leicht abgesenkt, so daß die Frontpartie des dritten Fahrzeuges etwa in Verlängerung der Ebene des Oberdecks des Transportanhängers 11 liegt. Dann werden die beiden folgenden Fahrzeuge 4 und 5 mit der Frontpartie nach vorne auf das Oberdeck des Transportanhängers 11 aufgefahren.

Anschließend wird sowohl die obere Ladebühne 14 des Kraftfahrzeugtransporters 10 als auch die obere Ladebühne des Transportanhängers 11 in die oberste Lage, und zwar über die Transporthöhe angehoben.

Die verbleibenden Fahrzeuge 6 bis 9 werden dann der Reihe nach über das Unterdeck des Transportanhängers bis eventuell auf die untere Ladebrücke 15 des Kraftfahrzeugtransporters 10 eingefahren.

Anschließend wird die obere Ladebühne 14 des Kraftfahrzeugtransporters 10 wieder abgesenkt, so daß der beladene Transporter eine Gesamthöhe von ungefähr 4 m nicht überschreitet.

Das Entladen der Fahrzeuge geschieht in umgekehrter Reihenfolge. Zunächst wird die untere Ladebrücke 15 entleert, und zwar nachdem die obere Ladebühne 14 wieder über die Transporthöhe angehoben wurde. Nach Entleeren der unteren Ladebrücke 15 wird das heckseitige Ende der oberen Ladebühne 14 so weit abgesenkt, daß Fahrzeug 3 herunterfahren kann.

Nach Einklappen der Schachtelschienen 25, Anheben des frontseitigen Endes der Ladebühne 14 und Einschwenken der Zwischenbühne 18 kann auch Fahrzeug 2 von dem Transporter heruntergefahren werden. Zum Ausladen von Fahrzeug 1 ist schließlich noch das frontseitige Ende der Ladebühne 14 so weit herunterzufahren, daß Ladebühne 14 und Plattform 13 miteinander fluchten. Nach Ausschieben der Verbindungsbrücke 21 kann dann auch Fahrzeug 1 den Transporter verlassen.

## Patentansprüche

1. Doppelstöckiger Kraftfahrzeugtransporter mit Fahrerhausüberbau (12) und einer oberen, zumindest in Beladestellung an diesen anschließenden, höhenverstellbaren Ladebühne (14), sowie einer unteren Ladebrücke (15),
**dadurch gekennzeichnet,**
daß die Ladebühne (14) zwischen dem Fahrerhausüberbau (12) und einem heckseitigen Tragarmpaar (17) eine um eine quer zur Transporterlängsachse angeordnete Schwenkachse (19) schwenkbare Zwischenbühne (18) aufweist, die für das Beladen in der Ebene der Ladebühne (14) anordbar ist und an ihrem Vorderende eine ausziehbare Verbindungsbrücke (21) besitzt, wobei eine Höhenverstelleinrichtung (16,17) für die Ladebühne (14) derart ausgebildet ist, daß die Ladebühne (14) über Transporthöhe anhebbar ist.

2. Transporter nach Anspruch 1, dadurch gekennzeichnet, daß die Zwischenbühne (18) heckseitig absenkbar ausgebildet ist.

3. Transporter nach Anspruch 1 oder 2, dadurch gekennzeichnet, daß die Zwischenbühne (18) mittels der quer zur Transporterlängsachse angeordneten Schwenkachse (19) an der Ladebühne (14) gelagert ist.

4. Transporter nach einem der Ansprüche 1 bis 3, dadurch gekennzeichnet, daß die Schwenkachse (19) im Bereich des frontseitigen Endes der Ladebühne angeordnet ist.

5. Transporter nach einem der Ansprüche 1 bis 4, dadurch gekennzeichnet, daß die Ladebühne (14) heckseitig von der Zwischenbühne (18) nach oben anhebbare Schachtelschienen (25) aufweist.

6. Transporter nach Anspruch 5, dadurch gekennzeichnet, daß die Schachtelschienen (25) mit einhängbaren Verlängerungen (26) versehen sind.

7. Transporter nach einem der Ansprüche 1 bis 6, dadurch gekennzeichnet, daß die Ladebühne (14) am Hinterende (24) mit einer ein- und ausschiebbaren Verbindungsbrücke versehen ist.

8. Transporter nach einem der Ansprüche 1 bis 7, dadurch gekennzeichnet, daß im Heckbereich der Ladebrücke (14) eine nach vorne ein- und ausschiebbare Verbindungsbrücke (23) angeordnet ist.

## Claims

1. Doubled-deck motor vehicle transporter with a cab superstructure (12) and an tipper loading ramp (14), which is adjustable in height, adjoining the said cab super-structure (12) at least in loading position, as well as a lower loading bridge (15), characterized in that the loading ramp (14) has between the cab super-structure (12) and a pair of supporting brackets (17) at the rear end, an intermediate ramp (18), which is pivotable about a pivoting axis (19) arranged transversely to the longitudinal axis of the transporter, which intermediate ramp (18) can be arranged on the plane of the loading ramp (14) for loading and which has an extendable connecting bridge (21) at its front end, a height adjustment device (16,17) for the loading ramp (14) being constructed in such a way that the loading ramp (14) can be raised above transport height.

2. Transporter according to Claim 1, characterized in that the intermediate ramp (18) is constructed to be lowerable at the rear end.

3. Transporter according to Claim 1 or 2, characterized in that the intermediate ramp (18) is positioned on the loading ramp (14) by means of the pivoting axis (19) arranged transversely to the longitudinal axis of the transporter.

4. Transporter according to one of Claims 1 to 3, characterized in that the pivoting axis (19) is arranged in the region of the front end of the loading ramp.

5. Transporter according to one of Claims 1 to 4, characterized in that the loading ramp (14) has, at the rear end, overlap rails (25) which can be raised upwards from the intermediate ramp (18).

6. Transporter according to Claim 5, characterized in that the overlap rails (25) are provided with attachable extensions (26).

7. Transporter according to one of Claims 1 to 6, characterized in that the loading ramp (14) is provided with a retractable and extendable connecting ridge at the rear end (24).

8. Transporter according to one of Claims 1 to 7, characterized in that, in the rear region of the loading bridge (14), a connecting bridge (23) is arranged which can be retracted and extended forwards.

## Revendications

1. Véhicule à double pont pour le transport de véhicules à moteur comprenant une superstructure (12) de la cabine de conducteur et une plate-forme de chargement supérieure (14) réglable en hauteur qui se raccorde, du moins en position de chargement, à ladite superstructure ainsi qu'un pont de chargement inférieur (15), caractérisé en ce que la plate-forme de chargement (14) comprend, entre la superstructure (12) de la cabine de conducteur et une paire de bras de support (17) située à l'arrière, une plate-forme intermédiaire (18) montée de façon à pouvoir pivoter autour d'un axe de pivotement (19) placé transversalement à l'axe longitudinal du véhicule transporteur et pouvant être amenée pour le chargement dans le plan de la plate-forme de chargement (14) et qui est équipée à son extrémité antérieure d'un pont de liaison télescopique (21), un dispositif de réglage en hauteur (16,17) pour la plate-forme de chargement (14) étant réalisé de telle façon que la plate-forme de chargement (14) peut être relevée au-delà du niveau de transport.

2. Véhicule transporteur selon la revendication 1, caractérisé en ce que la plate-forme intermédiaire (18) est conformée de façon à pouvoir être abaissée du côté arrière.

3. Véhicule transporteur selon l'une des revendications 1 ou 2, caractérisé en ce que la plate-forme intermédiaire (18) est montée sur la plate-forme de chargement (14) au moyen de l'axe de pivotement (19) disposé transversalement à l'axe longitudinal du véhicule transporteur.

4. Véhicule transporteur selon l'une des revendications 1 à 3, caractérisé en ce que l'axe de pivotement (19) est disposé dans la région de l'extrémité avant de la plate-forme de chargement.

5. Véhicule transporteur selon l'une des revendications 1 à 4, caractérisé en ce que la plate-forme de chargement (14) est équipée à l'arrière de la plate-forme intermédiaire (18) de rails à emboîtement (25) pouvant être relevés.

6. Véhicule transporteur selon la revendication 5, caractérisé en ce que les rails à emboîtement (25) sont munis de rallonges (26) accrochables.

7. Véhicule transporteur selon l'une des revendications 1 à 6, caractérisé en ce que la plate-forme de chargement (14) est équipée à l'extrémité arrière (24) d'un pont de liaison télescopique.

8. Véhicule transporteur selon l'une des revendications 1 à 7, caractérisé en ce qu'un pont de liaison télescopique (23) est disposé dans la section arrière de la plate-forme de chargement (14).
